# EUROPEAN PATENT APPLICATION

(11) **EP 2 289 629 A1**
(43) Date of publication of application: **02.03.2011**
(21) Application number: 09770147.8
(22) Date of filing: 23.06.2009
(51) Int. Cl.: B05B 7/04, A61C 17/02, A61C 17/022, B65D 83/44

(54) **DEVICE FOR EJECTING MIXED GAS TO WHICH LIQUID IS ADDED**

(30) Priority: 27.06.2008 JP 2008169248; 27.06.2008 JP 2008169249
(71) Applicant: Nippon Tansan Gas Co., Ltd., Adachi-ku Tokyo 120-0012 (JP)
(72) Inventor: OZAKI Yoji, Tokyo 120-0012 (JP); ARAI Junichi, Tokyo 120-0012 (JP)
(74) Representative: Knott, Stephen Gilbert
(86) International application number: PCT/JP2009/061396
(87) International publication number: WO 2009/157437

(57) **Abstract**

A device for intermittently ejecting a fixed quantity of a mixed gas, to which a liquid is added, to a target object. A device comprises a gas supply means (2) to which a carbon-dioxide-gas container (B) is mounted, a chemical liquid supply means (3) to which a chemical liquid container (M) is mounted, an ejection means (5) for mixing a supplied high-pressure gas and a supplied liquid together and ejecting the mixed gas, and an operation means (1). The device is adapted such that the high-pressure gas and the liquid are introduced into the ejection means (5) by operation of the operation means (1) and the mixed gas containing the liquid is obtained from the ejection means (5). The operation means (1) generates compressed air by operation of a pressing button, causes the compressed air to activate an operation section for the gas supply means (2) and for the chemical liquid supply means (3), obtaining a fixed quantity of the high-pressure gas and the liquid, and ejects in a pulse pattern a fixed quantity of the mixed gas from a nozzle, which is the ejection means (5).

## Description

### Field of the Invention

The present invention relates to a device for ejecting a mixed gas to which a liquid is added, to a target object.

### Background of the invention

In a field of oral health care or dental health care, it is desired to develop a device for ejecting intermittently a given amount of a mixed gas to which a medical liquid is added, to gaps between successive teeth of a patient to clean tooth gaps.

### Prior Art Document

Patent Document 1:Japanese Patent Kokai Hei 8-141450

### Disclosure of the Invention

### Problems to be solved by the Invention

The applicant has proposed in the above mentioned Patent Document 1 a device for supplying a fixed quantity of a high pressure gas. However, this device could not eject a given amount of a gas having a medicine liquid mixed therewith.

The present invention has for its object to provide a device for ejecting intermittently a predetermined amount of a mixed gas having a liquid mixed therewith to a target object. Means for Solving the Problems

According to the invention, in order to achieve the above mentioned object, a device for ejecting intermittently a mixed gas to which a liquid is added comprising a gas supplying means, a liquid supplying means, a gas-liquid mixing means for mixing a high pressure gas supplied from said gas supplying means and a liquid supplied from said liquid supplying means to produce a mixed gas, an ejecting means for ejecting a mixed gas supplied from said gas-liquid mixing means, and an operating means for operating said gas supplying means and liquid supplying means, whereby said high pressure gas and liquid are introduced into said gas-liquid mixing means by operating said operating means to eject said mixed gas having said liquid mixed therewith from said ejecting means, characterized in that said operating means comprises a push button and operating units for said gas supplying means and liquid supplying means, said operating units being driven by operating said push button to supply said high pressure gas and liquid into said gas-liquid mixing means to eject a given amount of said mixed gas from said ejecting means.

### Merits of the Invention

According to the ejecting device of the invention, a given amount of a mixed gas having a liquid mixed therewith can be ejected by operating said operating means.

### Brief Description of the Drawings

Fig. 1 is a front view showing a first embodiment of the mixed gas ejecting device according to the invention ;
Fig. 2 is a side view of the first embodiment;
Fig. 3 is an enlarged longitudinal cross sectional view illustrating a major portion of the first embodiment;
Fig. 4 is an enlarged longitudinal cross sectional view of the major portion during the operation;
Fig. 5 is a front view depicting a second embodiment of the device according to the invention;
Fig. 6 is a side view of the second embodiment;
Fig. 7 is an enlarged longitudinal cross sectional view showing a major portion of the second embodiment;
Fig. 8 is a side view illustrating a roller mechanism of the second embodiment; and
Fig. 9 is an enlarged longitudinal cross sectional view representing the operation of the major portion.

### Best Modes of the Invention

Now the present invention will be explained in detail with reference to embodiments illustrated in the drawings.

### Embodiment 1

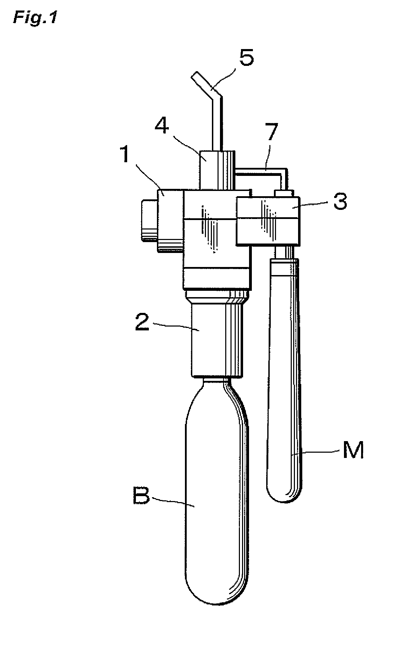

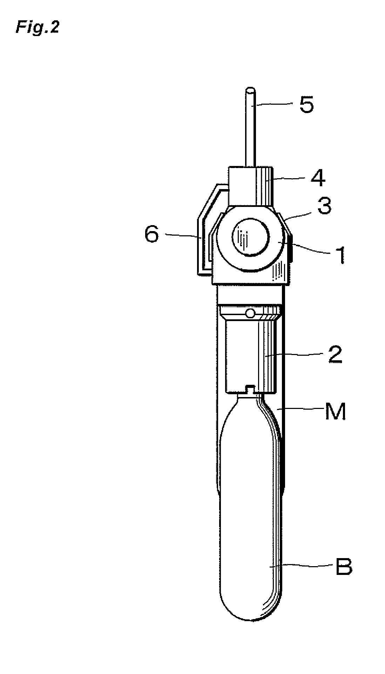

Fig. 1 is a front view showing a first embodiment of the device for ejecting a mixed gas to which a liquid is added according to the invention, and Fig. 2 is a side view thereof. The gas ejecting device comprises an operating means 1, a gas supplying means 2, a liquid drag supplying means 3, a gas-liquid mixing means 4 and an ejecting means 5.

To the gas supplying means 2 is connected a gas bomb B containing a liquefied carbon dioxide and to the liquid supplying means 3 is coupled with a liquid drag vessel M containing a liquid, for instance a refrigerant. The gas supplying means 2 is connected to the gas-liquid mixing means 4 by means of a gas conduit 6 and the liquid supplying means 3 is connected to the gas-liquid mixing means 4 via a liquid drag conduit 7. From a top of the gas-liquid mixing means 4 the ejecting means 5 constituted by a nozzle is projected upward.

Almost all parts constituting the above mentioned various means except for metal parts requiring a high precision, metal parts requiring a durability and rubber parts are made of a synthetic resin.

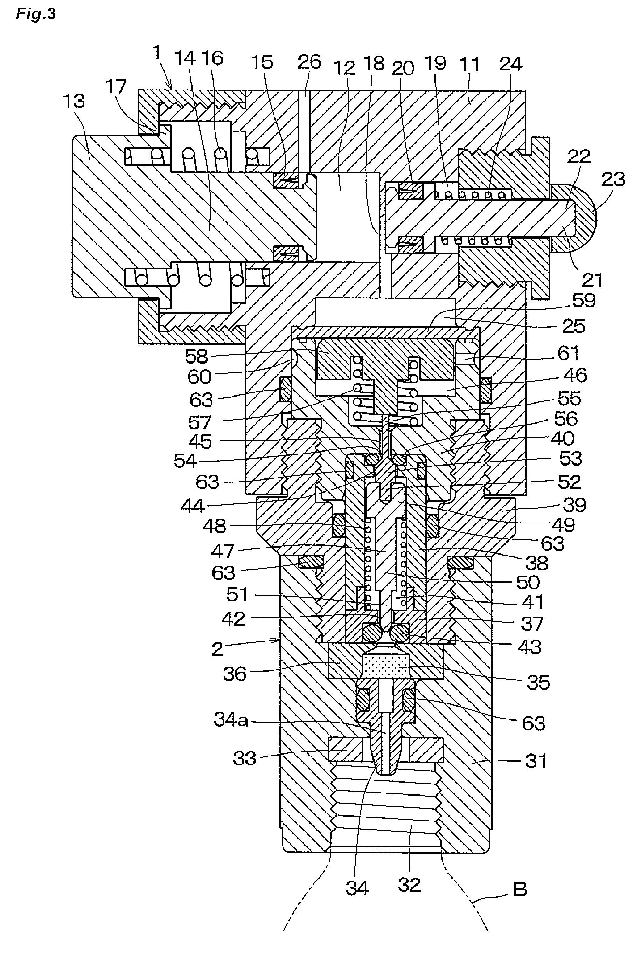

Fig. 3 is a longitudinal cross sectional view illustrating a major portion of the ejecting device of the present embodiment. The operating means 1 is provided within a body 11 and includes a first piston rod 14 having an operating push button 13 provided at a left end thereof, and said first piston rod 14 is installed within a larger diameter cylinder hole 12 via a ring-shaped packing 15 such that the first piston rod 14 can move in right and left hand directions in Fig. 3. The first piston rod 14 is always biased to move in the left hand direction by means of a compressed coiled spring 16, but this leftward movement is inhibited by a stopper 17.

The larger diameter cylinder hole 12 is communicated with a smaller diameter cylinder hole 19 via an air passage 18. Within the smaller diameter cylinder hole 19 is arranged a second piston rod 21 movably in right and left hand directions via a ring-shaped packing 20. A front end portion of the second piston rod 21 is formed into a thin portion 22 a part of which is projected from the body 11 and a bush member 23 is secured to a free end of the thin portion 22. The second piston rod 21 is biased to move in a left hand direction by means of a compressed coiled spring 24 whose resilient force is smaller than that of the compressed coiled spring 16

The larger diameter cylinder hole 12 and smaller diameter cylinder hole 19 are communicated with an operating chamber 25 by means of the air passage 18 provided within the body 11. In the body 11 there is further formed an air sucking and discharging hole 26 leading to the larger diameter cylinder hole 12.

The gas bomb B made of metal, having a liquefied carbon dioxide high pressure gas filled therein is detachably secured to a lower end of the gas supplying means 2 such that the top end of the gas bomb B is detachably screwed into a bomb fitting hole 32 formed in a body 31.

To a root portion of the bomb fitting hole 32 there is secured a ring-shaped rubber packing 33 which is urged against a top cover provided at a top opening of the carbon dioxide gas bomb B. At a center of the bomb fitting hole 32 there is provided a piercing portion 34 having a conduit hole 34a formed along a center axis thereof, said piercing portion 34 being inserted into the bomb B through the top cover of the bomb B.

Above the piercing portion 34 there is provided a filter holder 36 for holding a filter 35 which serves to prevent undesired penetration of impurities. Above the filter holder 35 there is further arranged a body 39 which is screwed into the body 31, and first and second inner holders 37 and 38 are provided within the body 39. The body 39 is also screwed into the body 11. Above the second inner holder 38 is arranged a third inner holder 40 such that the third inner holder 40 is surrounded by the body 39 and body 11.

The first and second inner holders 37 and 38 are coupled with each other in an upright direction such that a cylindrical measuring chamber 41 is formed at a center of the first and second inner holders 37 and 38. At a lower portion of measuring chamber 41 constituted by the first inner holder 37 there is formed a lower smaller diameter hole 42 and at the lower end of this lower smaller diameter hole 42 there is provided a first O-ring 43 made of rubber. In an upper portion of the measuring chamber 41 constructed by the second inner holder 38 there is formed an intermediate diameter hole 44, and in the third inner holder 40 there is formed an upper smaller diameter hole 45 such that the upper smaller diameter hole 45 is communicated with the intermediate diameter hole 44. Furthermore, in the third inner holder 40, there is formed a gas supply chamber 46 having a large diameter such that the gas supply chamber 46 is communicated with the upper smaller diameter hole 45.

Within the measuring chamber 41 is arranged a movable axial unit 47 movably in up and down directions. The movable axial unit 47 is biased to move upwardly by means of a compressed coiled spring 48. An upper portion of the movable axial unit 47 is formed as a flange 49 having a diameter slightly smaller than an inner diameter of the measuring chamber 41. A middle portion of the movable axial unit 47 is formed as an axial portion 50 having such a diameter that the compressed coiled spring 48 can be arranged around the axial portion 50. A lower portion of the movable axial unit 47 is formed as a lower closing axis 51 having such a diameter that the lower closing axis 51 can move within the lower smaller diameter hole 42. A lower end of the lower closing axis 51 is formed as a needle which may be inserted into the O-ring 43 to close the lower opening of the measuring chamber 47.

An upper end of the movable axial unit 47 is secured to an upper closing axis 52 including a base portion 53 whose diameter is slightly smaller than that of the intermediate diameter hole 44. An upper part of the base portion 53 is formed into a taper portion 54 whose diameter is gradually decreased toward an upper direction. The upper closing axis 52 further includes a pushing pin 55 extending from an upper end of the taper portion 54 through the upper lower diameter hole 45. Between the second and third inner holders 38 and 40 is arranged a second O-ring 56 made of rubber such that an upper opening of the measuring chamber 41 may be closed by urging the taper portion 54 of the upper closing axis 52 against the second O-ring 56.

Within the gas supply chamber 46 provided in the third inner holder 40 is arranged a diaphragm center 58 such that the upper end of the pushing pin 55 of the upper closing axis 52 is brought into contact with a lower end of the diaphragm center 58. The diaphragm center 58 is biased upwardly by means of a compressed coiled spring 57. It should be noted that the compressed coiled spring 57 has a spring force larger than that of the compressed coiled spring 24 of the operating means 1. Above the diaphragm center 58 is arranged a diaphragm 59 made of rubber such that the operating chamber 25 and gas supply chamber are separated from each other in an air tight manner.

Furthermore, in the third inner holder 40 there is formed a passage hole 61 for introducing a high pressure carbon dioxide gas filled in the gas supply chamber 46 into an annular recess 60 formed in an outer surface of the third inner holder 40. In the body 11, there is formed a gas discharge hole at a position on a rear side of the drawing of Fig. 3 such that the gas discharge hole is communicated with the annular recess 60, but the gas discharge hole is not shown in the drawings. One end of the gas conduit 6 shown in Fig. 2 is secured to the gas discharge hole, and the other end of the gas conduit 6 is connected to the gas-liquid mixing means 4.

In the gas supply means 2, O-rings 63 are arranged between the body 31 and the piercing portion 34, between the second inner holder 38 and the body 39, between the second inner holder 38 and the third inner holder 40, and between the body 11 and the third inner holder 40 for sealing these members in an air tight manner.

The liquid drag vessel M connected to the liquid supply means 3 is formed by a flat container made of soft synthetic resin, and is filled with the liquid drag. At an upper portion of the liquid vessel M there is formed a liquid retaining portion for holding therein a given quantity of the liquid drag. When a vale portion of the liquid retaining portion of the liquid vessel M is pushed by the push member 23, a given quantity of the liquid drag contained within the liquid retaining portion is discharged out of the liquid retaining portion. In this manner, a predetermined amount of the liquid drag can be discharged from the liquid vessel M through the liquid drag conduit 7 every time the push member 23 is operated.

An inner space of the gas-liquid mixing means 4 is communicated with the gas conduit 6 extending from the gas supply means 2 and the liquid drag conduit 7 extending from the liquid supply means 3, and a mixed gas is discharged from the gas-liquid mixing means 4 into the outside atmosphere via the ejecting means 5 extended outwardly from the gas-liquid mixing means 4.

Now the operation of the gas ejecting device of the present embodiment will be explained. The carbon dioxide gas bomb B is connected to the gas supply means 2 and the liquid drag vessel M is coupled with the liquid supply means 3. When the carbon dioxide gas bomb B is screwed into the bomb fitting hole 32 formed in the body 31, the top opening of the gas bomb B is urged against the rubber packing 33, and at the same time the piercing portion 34 is intruded into the gas bomb B via a metal film covering the top opening of the gas bomb B. Then, the liquefied high pressure carbon dioxide gas contained in the gas bomb B is evaporated to produce a high pressure carbon dioxide gas having a pressure of, for instance 60 kg/cm³. The high pressure gas is then is introduced into the measuring chamber 41 through the conduit hole 34a of the piercing portion 34, filter 35 and a space between the lower smaller diameter hole 42 and lower closing axis 51. The movable axial unit 47 is remained at the uppermost position by means of the compressed coiled spring48, and the taper portion 54 of the upper closing axial portion 52 is urged against the second O-ring 56. Therefore, the high pressure carbon dioxide gas filled in the measuring chamber 41 could not be discharged.

The discharge conduit of the liquid drag vessel M is connected to the liquid conduit 7 and an upper portion of the liquid drag vessel M is fixed to the liquid supply means 3 such that a given amount of the liquid drag can be discharged from the liquid drag vessel M by operating the push member 23.

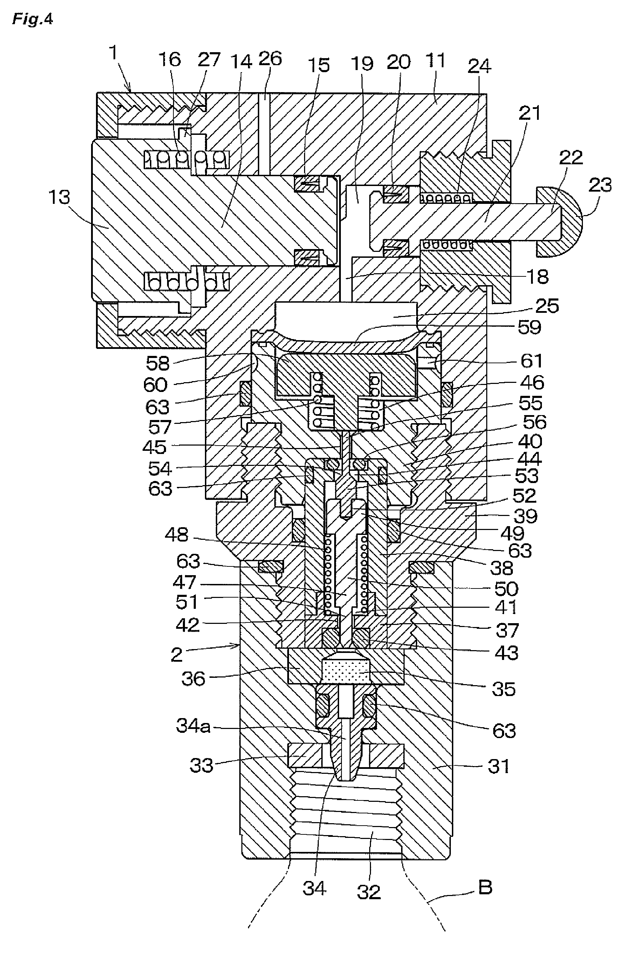

A user holds the gas supplying means 2 and carbon dioxide gas bomb B by his or her single hand and pushes the operating push button 13 by the thumb finger inwardly to move the first piston rod 14 in the right hand direction against the spring force of the compressed coiled spring 16 as shown in Fig. 4. Then, the air sucking and discharging hole 26 is closed by the first piston rod 14 and the inner space of the larger diameter cylinder hole 12 is separated from the outer atmosphere by means of the ring-shaped packing 15. An air within the inner space of the larger diameter cylinder hole 12 is compressed by the first piston rod 14 moving in the right direction. Then, the compressed air is transferred to the smaller diameter cylinder hole 19 via the air passage 18, and the second piston rod 21 is pushed in the right hand direction against the spring force of the compressed coiled spring 24. Since the spring force of the compressed coiled spring 24 is small, the second piston rod 21 has been moved into the right hand position at a rather early stage of the movement of the first piston rod 14.

By the movement of the second piston rod 21, the valve portion of the liquid drag vessel M is pushed by the push member 23 to discharge a given amount of the liquid drag contained within the liquid retaining portion of the liquid drag vessel M. In this manner, a predetermined amount of the liquid drag is discharged into the mixing chamber of the gas-liquid mixing means 4 via the liquid conduit 7. When the pushing member 23 is returned into the original position, the liquid retaining portion is refilled with the liquid drag contained in the liquid drag vessel M.

Substantially at the same time, the compressed air is introduced into the operating chamber 25 such that the pressure inside the operating chamber 25 is increased to a value twice the atmospheric pressure, and the diaphragm 59 is pushed downward at a timing slightly later than a timing at which the movement of the second piston rod 21 is initiated. This is due to the fact that the spring force of the compressed coiled spring 57 is larger than that of the compressed coiled spring 24 for operating the second piston rod 21. A force for pushing the diaphragm 59 downward is a product of a surface area of the diaphragm and an inner pressure within the operating chamber 25. A force for pushing the diaphragm 59 upward is a sum of a spring force of the two compressed coiled springs 48 and 57 and a product of an area of the intermediate diameter hole 44 and a gas pressure filled within the measuring chamber 41. The force for moving the diaphragm 59 upward is transferred to the diaphragm via the movable axial unit 47, upper closing axis 52 and diaphragm center 58.

It should be noted that the force for moving the diaphragm 59 downward transferred to the diaphragm from the operating chamber 25 is larger than the force for moving the diaphragm 59 upward. Therefore, the operating force generated by the operating push button 13 bents the diaphragm 59 downward and the diaphragm center 58 and movable axial unit 47 are moved downward. When the movable axial unit 47 is moved downward, the lower closing axis 51 of the movable axial unit 47 is inserted into the first O-ring 43 to close the lower opening of the measuring chamber 41. At the same time, the taper portion 54 of the upper closing axis 52 is separated from the second O-ring 56. Then, the high pressure carbon dioxide gas filled in the measuring chamber 41 is rapidly flown into the gas supply chamber 46 through the intermediate diameter hole 44 and a space between the upper smaller diameter hole 45 and the pushing pin 55.

Furthermore, the high pressure carbon dioxide gas within the gas supply chamber 46 is discharged into the mixing chamber of the gas-liquid mixing means 4 via the passage hole 61 formed in the third inner holder 40, the annular recess 60, the gas discharge hole and the gas conduit 6. Within the mixing chamber, the liquid drag supplied from the liquid supplying means 3 is mixed with the high pressure carbon dioxide gas to produce the mixed gas, and the thus produced mixed gas is rapidly ejected from the ejecting means 5. For instance, the mixed gas may be ejected toward spaces between teeth to clean the tooth space. An amount of the mixed gas ejected from the device by a single operation is equal to an amount of the gas filled in the measuring chamber 41.

When the user's finger is separated from the operating push button 13, the first and second piston rods 14 and 21 are returned into the original positions due to the spring force of the compressed coiled springs 16 and 24, and therefore the push member 23 is also returned into the original position. The pressure inside the larger diameter hole 12, smaller diameter hole 19 and operating chamber 25 is changed to the atmospheric pressure via the air sucking and discharging hole 26. Furthermore, the movable axial unit 47 and diaphragm center 58 are moved upward due to the spring force of the compressed coiled springs 48 and 57, and therefore the diaphragm 59 is returned into the original posture.

The taper portion 54 of the upper closing axis 52 is urged against the second O-ring, and thus the upper opening of the measuring chamber 41 is closed. At the same time, the lower closing axis 51 is moved upward and the tip of the lower closing axis 51 is removed from the first O-ring 43 to open the lower opening of the measuring chamber 41. Then, the high pressure carbon dioxide gas is supplied from the carbon dioxide gas bomb B into the measuring chamber 41.

When the operating push button 13 is pushed again, a predetermined amount of the mixed gas is ejected from the ejecting means 5 in the manner just explained above. By repeating the pushing operation of the operating push button 13 of the operating means 1, the mixed gas can be ejected repeatedly.

In the present embodiment, the operation within the operating means 1 is carried out by the air, but according to the invention, any gas other than the air or any operating liquid may be utilized.

### Embodiment 2

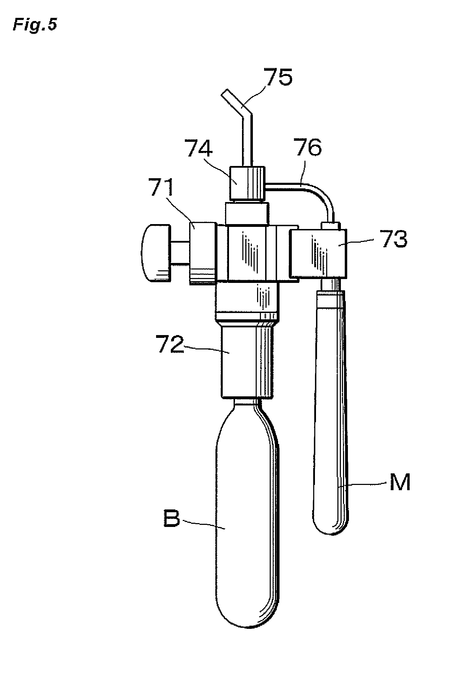

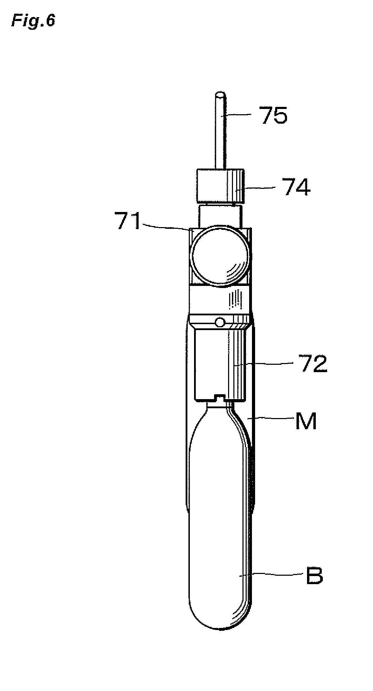

Figs. 5 and 6 are front and side views, respectively showing a second embodiment of the mixed gas ejecting device according to the invention. The ejecting device comprises an operating means 71, a gas supplying means 72, a liquid drag supplying means 73, a gas-liquid mixing means 74 and an ejecting means 75.

To the gas supplying means 72 is connected a carbon dioxide gas bomb B and to the liquid drag supplying means 73 is coupled a liquid drag vessel M. Between the liquid drag supplying means 73 and the gas-liquid mixing means 74 is provided a liquid drag conduit 76 and the ejecting means 75 consisting of a nozzle 75 is extended from the gas-liquid mixing means 74.

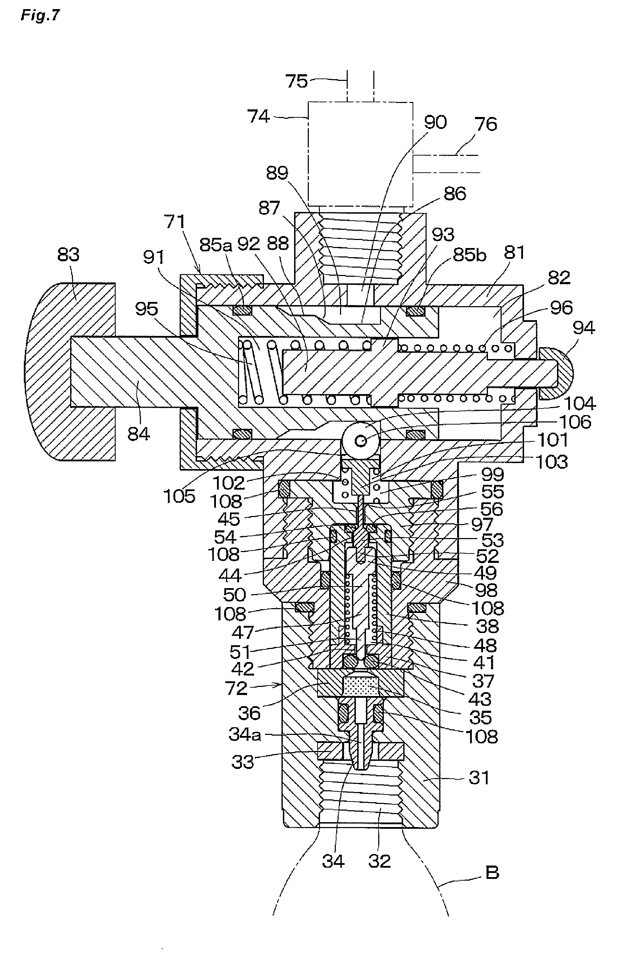

Fig. 7 is a longitudinal cross sectional view illustrating a major portion of the ejecting device of the second embodiment. In Fig. 7 portions similar to those of the first embodiment are denoted by the same reference numerals used in the first embodiment. The operating means 71 is installed within a body 81 and includes a first piston rod 84 arranged movably in a horizontal direction within a first cylinder hole 82 formed in the body 81 via a pair of O-rings 85a and 85b arranged separately from each other. An operating push button 83 is secured to a left hand end of the first piston rod 84. In an outer surface of a portion of the first piston rod 84 situating between the O-rings 85a and 85b there is formed a cam mechanism consisting of a tubular cam. The tubular cam has a smaller diameter cam 86, an inclined cam 87 and a larger diameter cam 88 aligned successively from left to right. A space around these cams 86-88 constitutes a gas supply chamber 89. The body 81 has further formed therein a gas discharge hole 90 which is communicated with the gas supply chamber 89 within the body 81. The gas discharge hole 90 is communicated with a mixing chamber of the gas-liquid mixing means 74.

In the first piston rod 84 there is formed a second cylinder hole 91 extending coaxially with the first cylinder hole 82 such that a left hand end of the second cylinder hole 91 is closed and a right hand end of the second cylinder hole 91 is opened. Within the second cylinder hole 91 is arranged a second piston rod 92 movably in a horizontal direction. At a middle portion of the second piston rod 92 there is formed a flange portion 93, and a front end of the second piston rod 92 is thinned and is extruded from the body 81 through a hole formed in the body 81. To the front end of the thus thinned portion of the second piston rod 92 is secured a push member 94 having a semispherical shape. A first compressed coiled spring 95 is arranged around the second piston rod 92 within a portion of the second cylinder hole 91 situating on the left hand side of the flange portion 93, and a second compressed coiled spring 96 is arranged also around the second piston rod 92 within a portion of the first cylinder hole 82 situating on the right hand side of the flange 93. A spring force of the second compressed coiled spring 96 is smaller than that of the first compressed coiled spring 95, and therefore in the normal condition, the first piston rod 84 is biased to move in the left hand direction. In this manner, in the normal condition, the first and second piston rods 84 and 92 are remained in the positions shown in Fig. 5.

Similar to the first embodiment, at a lower end of the gas supplying means 72 a carbon dioxide gas bomb B is screwed into a body 31, and to an upper end of the body 31 is screwed a body 98 in which first, second and third inner holders 37, 38 and 97 are installed. The body 98 is screwed into the lower end of the body 81. The first and second inner holders 37 and 38 are coupled with each other to form a measuring chamber 41 having a cylindrical shape. In the first inner holder 37 forming a lower portion of the measuring chamber 41 there is formed a lower smaller diameter hole 42. In the second inner holder 38 there are formed an intermediate diameter hole 44 and an upper smaller diameter hole 45 such that the these holes 44 and 45 are communicated with each other in an axial direction. Furthermore, in the third inner holder 97 there is formed a larger diameter hole 99 which is communicated with the upper smaller diameter hole 45.

The measuring chamber 41 is formed in similar manner to that of the first embodiment, and a second O-ring 56 is provided between the second inner holder 38 and the third inner holder 97 which serves to close the upper opening of the measuring chamber 41 together with a taper portion 54 of an upper closing axis 52.

In the body 81 is further formed a third cylinder hole 101 which is communicated with the larger diameter hole 99 formed in the third inner holder 97. Within the third cylinder hole 101 is arranged piston rod 103 such that the lower end of the piston rod 103 is brought into contact with an upper end of a pushing pin 55 of the upper closing axis 52 and is biased by a compressed coiled spring 102 to move upward.

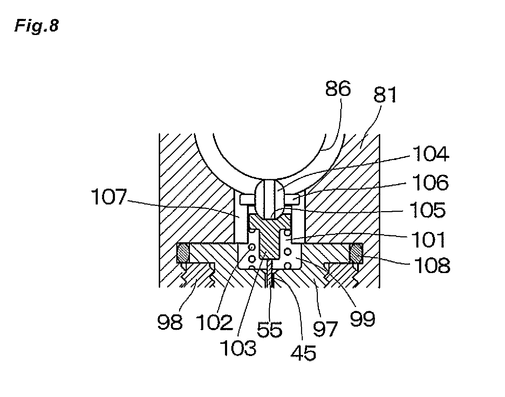

On the piston rod 103 is arranged a roller 104 rotatably journaled by an axis 106 extending in a direction perpendicular to the moving direction of the first piston rod 84 as depicted in Fig. 8. An upper side of the roller 104 is brought into contact with the cam mechanism formed on the first piston rod 84 and a lower side of the roller 104 is held in position by a recess 105 formed in an upper surface of the piston rod 103. The axis 106 of the roller 104 is held movably up and down by a slot bearing 107 formed in the body 81.

In the gas supply means 72, O-rings 108 are arranged between the body 31 and a piercing portion 34, between the second inner holder 38 and the body 98, between the second inner holder 38 and the third inner holder 97, and between the body 31 and the third inner holder 97 for sealing these members in an air tight manner.

At the upper side of the liquid drag vessel M is formed a liquid retaining chamber, and when a valve portion of the liquid retaining chamber is pushed by the push member 94, the liquid drag filled in the liquid retaining chamber of the liquid drag vessel M is discharged from the liquid drag conduit 76 by a pumping action.

A mixing chamber in the gas-liquid mixing means 74 is communicated with the gas discharge hole 90 formed in the body 81 of the gas supplying means 72 as well as with the liquid drag conduit 76 extending from the liquid drag supplying means 73 and an ejecting means 75 is extended outwardly from the mixing chamber.

Upon using the ejecting device, the carbon dioxide gas bomb B is secured to the gas supplying means 72 and the liquid drag vessel M is connected to the liquid drag supplying means 73 like as the first embodiment. Then the liquefied carbon dioxide is evaporated to produce a high pressure carbon dioxide gas. The high pressure carbon dioxide gas thus produced is filled in the measuring chamber 41. An outlet pipe of the liquid drag vessel M is coupled with the liquid drag conduit 76 of the liquid drag supplying means 73 and the upper portion of the liquid drag vessel M is secured to the liquid drag supplying means 73. Then, a predetermined amount of the liquid drag is discharged into the liquid retaining chamber.

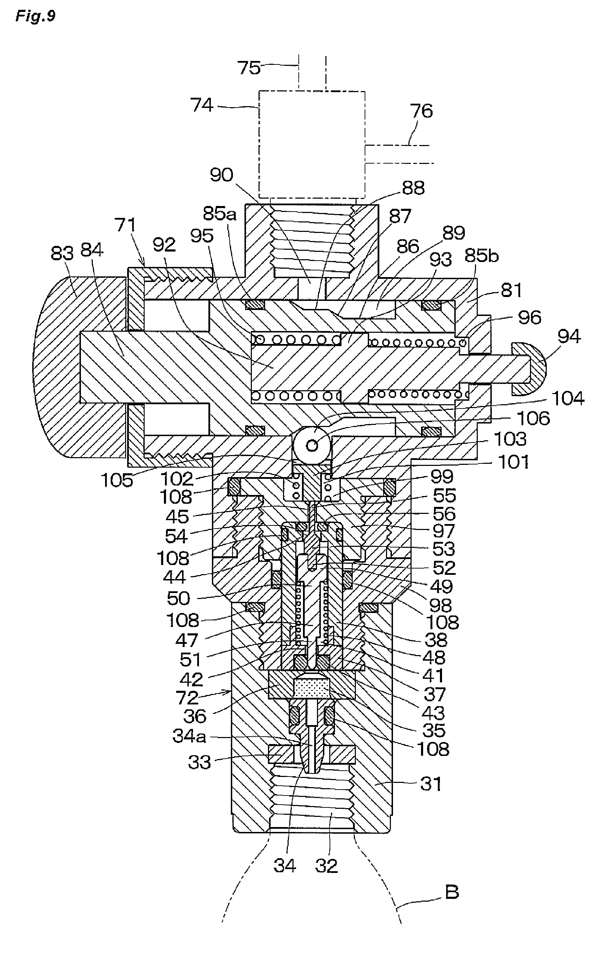

When a user grasps the gas supplying means 72 and carbon dioxide gas bomb B and pushes the operating push button 83 of the operating means 71. Then, as illustrated in Fig. 9, the first piston rod 84 is moved in the right hand direction against the spring force of the first compressed coiled spring 95, and at the same time the second piston rod 92 is moved in the right hand direction against the spring force of the second compressed coiled spring 96. In this case, the spring force of the second compressed coiled spring 96 is smaller than that of the first compressed coiled spring 95, and therefore the second piston rod 92 is moved in the right hand direction at a timing earlier than that at which the movement of the first piston rod 84 is initiated.

By the above movement of the second piston rod 92, the push button 94 pushes the valve portion of the liquid drag vessel M to discharge the liquid drag from the liquid drag retaining chamber. Then, the liquid drag is introduced into a mixing chamber of the gas-liquid mixing means 74 through the liquid drag conduit 76.

Substantially at the same time, the roller 104 is rotated about the axis 106 to separate from the smaller diameter cam 86 of the cam mechanism formed on the first piston rod 84 and is brought into contact with the larger diameter cam 88. Therefore, the roller 104 is moved downward, and also the movable axial unit 47 is moved downward via the piston rod 103 and pushing pin 55 to close the lower opening of the measuring chamber 41. In response to the downward movement of the movable axial unit 47, the high pressure carbon dioxide gas filled within the measuring chamber 41 is rapidly flown into the larger diameter hole 99 through the intermediate diameter hole 44 and a space between the upper smaller diameter hole and the pushing pin 55.

The high pressure carbon dioxide gas flown into the larger diameter hole 99 is further flown into the gas supply chamber 89 via the third cylinder hole 101 formed in the body 81, and is then discharged into the mixing chamber of the gas-liquid mixing means 74 through the gas discharge hole 90. Within the mixing chamber, the carbon dioxide gas is mixed with the liquid drag, and the thus produced mixed gas is rapidly ejected from the front end of the ejecting means 75.

When the user's finger is removed from the operating button 83, the first and second piston rods 84 and 92 are returned into the original positions due to the spring force of the compressed coiled springs 95 and 96. During this operation, the roller 104 is moved upward together with the piston rod 103 and movable axial unit 47 by the spring force of the compressed coiled springs 48 and 102, and the roller 104 is separated from the larger diameter cam 88 and is brought into contact with the smaller diameter cam 86 via the inclined cam 87.

Furthermore, the upper opening of the measuring chamber 41 is closed by the ascending movable axial unit 47, and the measuring chamber 41 is refilled with the high pressure carbon dioxide gas like as the first embodiment.

By pushing the operating button 83 repeatedly, the above operation is carried out repeatedly to eject the mixed gas from the ejecting means 75 like as the first embodiment.

It should be noted that in the first and second embodiments the ejecting device is explained to be used in oral health care, but the ejecting device according to the invention may be utilized in any other applications. Furthermore, the gas is not limited to the carbon dioxide gas and the liquid is not limited to the liquid drag. The carbon dioxide gas bomb B and liquid drag vessel M may be installed within suitable housings. In this case, the liquid drag conduit 7, 76 may be also installed within the housing. Moreover, the ejecting means 5, 75 may be connected to any desired position of the gas-liquid mixing means 4, 74, and a free end of the ejecting means may be directed into any desired direction. The liquid drag supplying means 3, 73 may be connected to any desired position of the gas-liquid mixing means 4, 74.

An ejecting velocity, an ejecting range, an amount of the mixed gas ejected from the ejecting means 5, 75 and a size of a droplet of the liquid drag in the mixed gas may be adjusted by suitably selecting various parameters such as a diameter of the ejecting nozzle.

### Explanation of the Reference Numerals

- 1, 71: operating means
- 2, 72: gas supplying means
- 3, 73: liquid drag supplying means
- 4, 74: gas-liquid mixing means
- 5, 75: ejecting means
- 6: gas conduit
- 7, 76: liquid drag conduit
- 11, 31, 39, 81, 98: body
- 12: larger diameter cylinder hole
- 13, 83: operating push button
- 14, 21: piston rod
- 16, 24, 48, 57, 95, 96, 102: compressed coiled spring
- 18: air passage
- 19: smaller diameter cylinder hole
- 23, 94: push member
- 25: operating chamber
- 32: bomb fitting hole
- 37, 38, 40, 97: inner holder
- 41: measuring chamber
- 42, 45: smaller diameter hole
- 46, 89: gas supply chamber
- 47: movable axial unit
- 51, 52: closing axis
- 54: taper portion
- 55: pushing pin
- 59: diaphragm
- 60: annular recess
- 82, 91, 101: cylinder hole
- 84, 92, 103: piston rod
- 104: roller
- B: carbon dioxide gas bomb
- M: liquid drag vessel

## Claims

1. A device for ejecting mixed gas to which liquid is added comprising a gas supplying means, liquid supplying means, a gas-liquid mixing means for mixing a high pressure gas supplied from the gas supplying means with a liquid supplied from the liquid supplying means, an ejecting means for ejecting a mixed gas produced by said gas-liquid mixing means, and an operating means for operating said gas supplying means and liquid supplying means, whereby said high pressure gas and liquid are introduced into said gas-liquid mixing means by driving said operating means and the mixed gas to which the liquid is added is ejected from said ejecting means, **characterized in that** said operating means includes an operating push button and operating units for said gas supplying means and liquid supplying means, said operating units being driven by operating said operating push button to supply the high pressure gas and liquid into the gas-liquid mixing means to produce the mixed gas which is ejected from said ejecting means.

2. The ejecting device according to claim 1, **characterized in that** a pressure of an operating gas or liquid within said operating means is increased by operating said operating push button to drive said operating units.

3. The ejecting device according to claim 2, **characterized in that** said operating gas is an air.

4. The ejecting device according to claim 1, **characterized in that** a valve portion of the liquid supplying means is driven by operating said operating push button to obtain a given amount of the liquid, and a valve portion of said gas supplying means is driven by a cam mechanism. Which is operated by said operating push button.

5. The ejecting device according to claim 4, **characterized in that** said valve portion of the gas supplying means is operated by a cam operation of said cam mechanism.

6. The ejecting device according to any one of claims 1-3, **characterized in that** a high pressure gas bomb is secured to said gas supplying means and a liquid vessel is secured to said liquid supplying means.

7. The ejecting device according to claim 6, **characterized in that** said gas supplying means includes a measuring chamber, a predetermined amount of the high pressure gas is discharged from said measuring chamber by means of said operating means, and the measuring chamber is refilled with a predetermined amount of the high pressure gas from said high pressure gas bomb.

8. The ejecting device according to claim 7, **characterized in that** within said measuring chamber, is arranged a movable axial unit having upper and lower closing axes provided at upper and lower ends of said movable axial unit, respectively, said measuring chamber includes upper and lower valve portions consisting of said upper and lower closing axes and upper and lower O-rings, and said upper and lower valve portions are driven alternately by said upper and lower closing axes, respectively in cooperation with the upper and lower movements of said movable axial unit.

9. The ejecting device according to any one of claims 1-8, **characterized in that** said high pressure gas is a high pressure carbon dioxide gas.

10. The ejecting device according to claim 2, **characterized in that** a valve portion of said liquid vessel is operated by means of said operating unit for the liquid supplying means to discharge a predetermined amount of the liquid from the liquid supplying means by a pumping action.
